# EUROPEAN PATENT APPLICATION

(11) **EP 2 628 542 A1**
(43) Date of publication of application: **21.08.2013**
(21) Application number: 12155672.4
(22) Date of filing: 15.02.2012
(51) Int. Cl.: B02C 19/22, B02C 18/00

(54) **Grinder assembly for a waste disposal device**

(71) Applicant: Ta Ya Kitchen Utensil Co., Ltd., Taichung City (TW)
(72) Inventor: Chang, Kuang-Nan, Taichung City (TW)
(74) Representative: Zimmermann, Tankred Klaus

(57) **Abstract**

A grinder assembly for a waste disposal device (100) includes a rotary shaft (3) mounted rotatably in a grinder tank (200) about an axis (L), a shredding blade unit (4), and a plurality of interconnecting ribs (5) extending radially to interconnect the shredding blade unit (4) and the rotary shaft (3). The shredding blade unit (4) is configured to be rotated along a spiral path and has a forward-facingmajor surface (411) which forces kitchen waste in the grinder tank to advance forward so as to render the stirring and shredding operation efficiently.

## Description

This invention relates to a waste disposal device for stirring, shredding and drying kitchen waste, more particularly to a grinder assembly for a waste disposal device.

A conventional waste disposal device, such as those disclosed in U. S. Patent Nos. 5,710,042 and 6,620,613, generally includes a grinder tank for loading of kitchen waste thereinto, a rotary shaft having vanes or blades rotatably mounted in the grinder tank to stir and shred the loaded kitchen waste, and a heater disposed to heat and dry the loaded kitchen waste during the stirring and shredding process. In such conventional waste disposal device, odor is generated and leaks out during storage of the loaded kitchen waste or the heating process. Besides, as the rotary shaft extends in a horizontal direction and the vanes extend perpendicular to the rotary shaft, the stirring and shredding effect of unsatisfactory.

An object of the present invention is to provide a grinder assembly for a waste disposal device which can efficiently and evenly stir and shred kitchen waste.

According to this invention, the grinder assembly includes a rotary shaft which extends along an axis to be disposed in a stirring and shredding chamber of a grinder tank, and to be rotatable about the axis, a shredding blade unit disposed to be rotated with the rotary shaft, and a plurality of interconnecting ribs, each extending in a radial direction relative to the axis to interconnect the rotary shaft and the shredding blade unit. The shredding blade unit has leading and trailing blade segments which are angularly displaced from each other about the axis, and which are opposite to each other in the direction of the axis. Each of the leading and trailing blade segments has a forward-facing major surface which is oriented to be inclined relative to the axis. By virtue of rotation of the shredding blade unit with the rotary shaft, kitchen waste in the stirring and shredding chamber is successively forced by the forward-facing major surfaces to advance forward. Two adjacent ones of the interconnecting ribs are angularly displaced from each other about the axis so as to firmly interconnect the shredding blade unit and the rotary shaft.

Other features and advantages of the present invention will become apparent in the following detailed description of the preferred embodiment of the invention, with reference to the accompanying drawings, in which:
Fig. 1 is a perspective view of a first embodiment of a grinder assembly for a waste disposal device according to this invention;
Fig. 2 is a perspective view showing the first embodiment mounted in a waste disposal device;
Fig. 3 is a perspective view of a second embodiment of the grinder assembly according to this invention; and
Fig. 4 is a perspective view of the second embodiment mounted in a grinder tank of a waste disposal device.

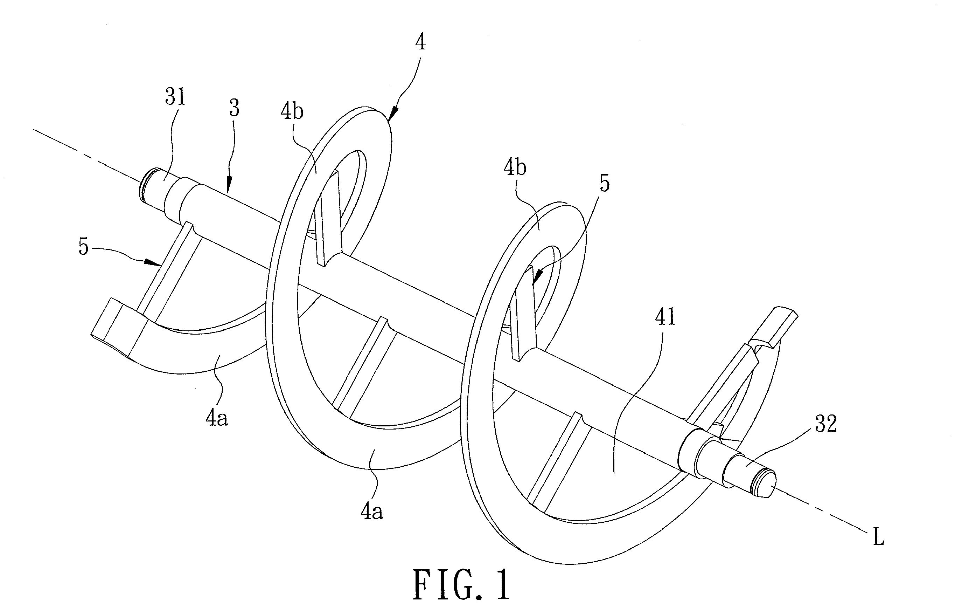

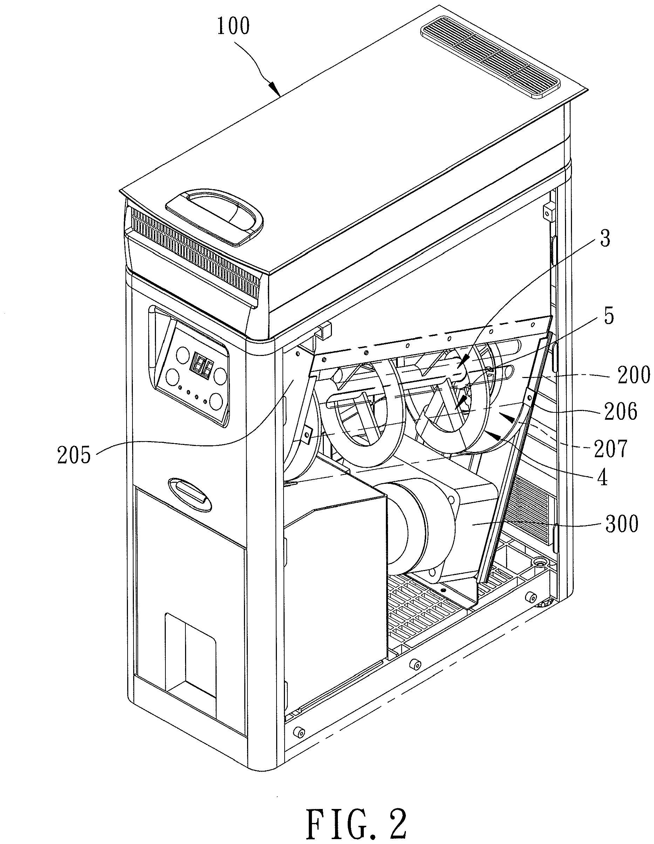

Referring to Figs. 1, 2 and 4, the first embodiment of a grinder assembly for a waste disposal device 100 according to the present invention is shown to be disposed in a grinder tank 200. The grinder tank 200 is disposed within a housing of the waste disposal device 100, and is inclined relative thereto. The grinder tank 200 has an inner rounded surface 202 which extends angularly about an axis (L) and in a direction of the axis (L) to terminate at front and rear edges 203, 204, and front and rear bearing walls 205, 206 which are respectively joined with the front and rear edges 203, 204 to cooperate with the inner rounded surface 202 to define a stirring and shredding chamber 207 for loading of kitchen waste therein. A drive unit 300 is disposed below the grinder tank 200 to drive the grinder assembly to rotate about the axis (L).

The grinder assembly of this embodiment is shown to comprise a rotary shaft 3, a shredding blade unit 4, and a plurality of interconnecting ribs 5.

The rotary shaft 3 extends along the axis (L) to have first and second ends 31, 32 which are respectively and rotatably mounted on the front and rear bearing walls 205, 206 so as to be rotatable about the axis (L). One of the first and second ends 31, 32 is disposed to be coupled with the drive unit 300 so as to be driven by the drive unit 300.

The shredding blade unit 4 includes a plurality of the leading blade segments (4a) and a plurality of the trailing blade segments (4b) which are alternately displaced from one another so as to cooperatively form a spiral contour that extends spirally around the axis (L). Two adjacent ones of the leading and trailing blade segments (4a, 4b) are angularly displaced from each other about the axis (L), and opposite to each other in the direction of the axis (L). Each of the leading and trailing blade segments (4a, 4b) has a forward-facing maj or surface 411 oriented to be inclined relative to the axis (L).

Each interconnecting rib 5 extends in a radial direction relative to the axis (L) to interconnect the rotary shaft 3 and the shredding blade unit 4. Each two adjacent ones of the interconnecting ribs 5 are angularly displaced from each other about the axis (L). Thus, the shredding blade unit 4 is rotated with the rotary shaft 3.

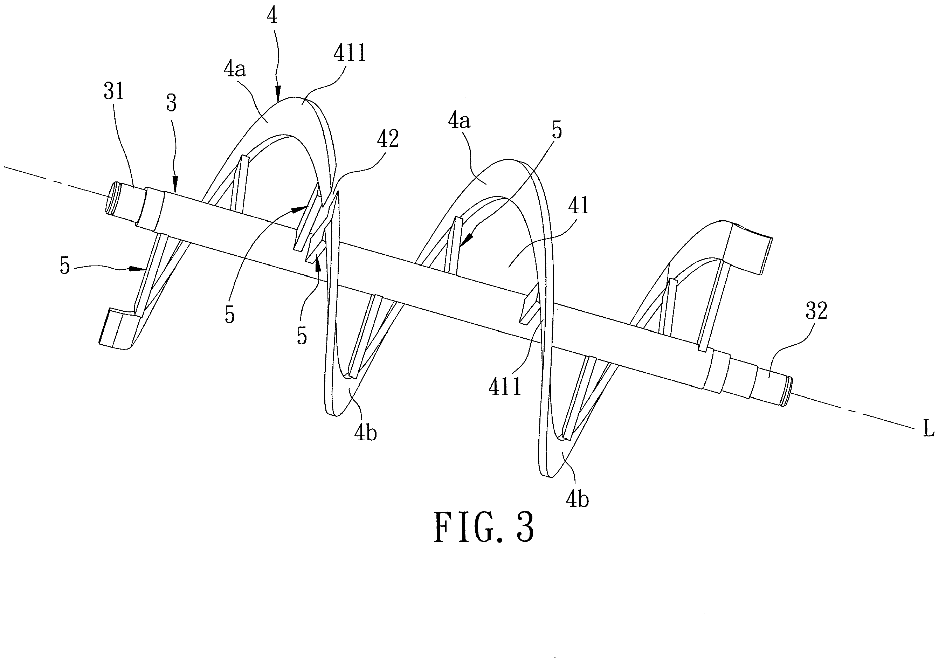

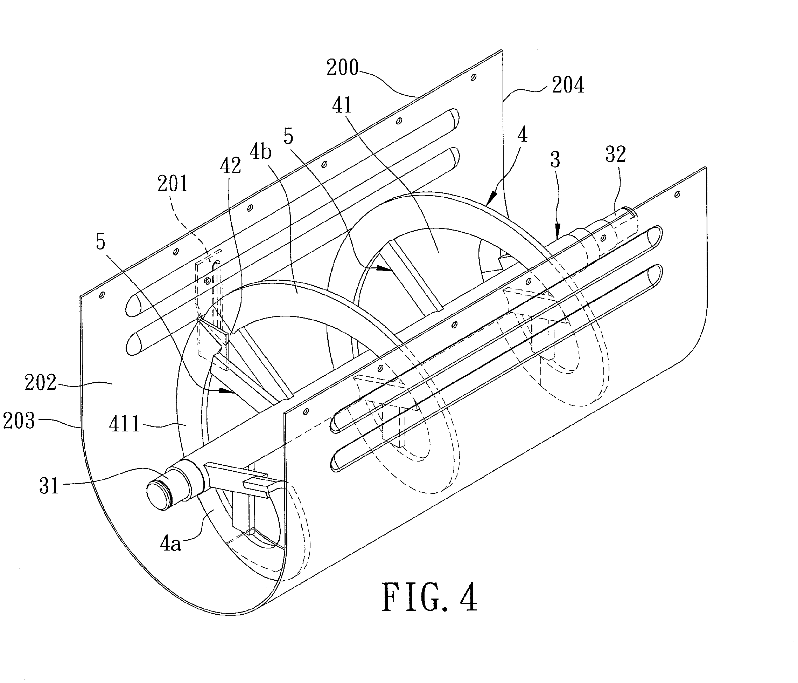

Referring to Figs. 3 and 4, a second embodiment of the grinder assembly according to this invention is similar to the first embodiment. In the second embodiment, the spiral contour is configured to be interrupted by a gap 42 which extends along a central line that is perpendicular to the axis (L). Additionally, two interconnecting ribs 5 are engaged with the spiral contour and located adjacent to the gap 42 so as to reinforce the structural strength of the shredding blade unit 4. Moreover, a fixed shredder 201 is affixed to the inner rounded surface 202 of the grinder tank 200 to face the gap 42. Thus, when the shredding blade unit 4 is rotated with the rotary shaft 3, the fixed shredder 201 can cooperate with the gap 42 to generate a shear force for cutting the waste so as to render the shredding operation more efficient.

As illustrated, by virtue of the shredding blade unit 4 which is moved along a spiral path around the axis (L), i.e., with both a circumferential direction and an axial direction, the stirring and shredding process can be performed efficiently. Further, by virtue of the inclined grinder tank 200, a large amount of waste falls in a rear region of the stirring and shredding chamber 207 and is successively forced by the forward-facing major surfaces 411 to advance forward by rotation of the shredding blade unit 4 for further enhancing the stirring and shredding effect. Moreover, the interconnecting ribs 5 firmly interconnect the rotary shaft 3 and the shredding blade unit 4 to prevent deformation of the shredding blade unit 4, and are configured to form a relatively large passage 41 between the interconnecting ribs 5 and the shredding blade unit 4 for the kitchen waste so as not to be prone to get stuck during rotation.

## Claims

1. A grinder assembly for a waste disposal device (100) which includes a grinder tank (200) having an inner rounded surface (202) that extends angularly about an axis (L) and in a direction of the axis (L) to terminate at front and rear edges (203, 204), and front and rear bearing walls (205, 206) that are respectively joined with the front and rear edges (203, 204) to cooperate with the inner rounded surface (202) to define a stirring and shredding chamber (207) for loading of kitchen waste thereinto, and a drive unit (300) disposed to drive said grinder assembly to rotate about the axis (L), said grinder assembly comprising:
a rotary shaft (3) which extends along the axis (L) to be disposed in the stirring and shredding chamber (207), and to be rotatable about the axis (L); and
a shredding blade unit (4) disposed to be rotated with said rotary shaft (3), **characterized in that**:
said shredding blade unit (4) has leading and trailing blade segments (4a, 4b) which are angularly displaced from each other about the axis (L), and which are opposite to each other in the direction of the axis (L), each of said leading and trailing blade segments (4a, 4b) having a forward-facing major surface (411) which is oriented to be inclined relative to the axis (L) such that, by virtue of rotation of said shredding blade unit (4) with said rotary shaft (3), the kitchen waste is permitted to be successively forced by said forward-facing major surfaces (411) of said leading and trailing blade segments (4a, 4b) to advance forward;
said grinder assembly further comprising a plurality of interconnecting ribs (5), each extending in a radial direction relative to the axis (L) to interconnect said rotary shaft (3) and said shredding blade unit (4), two adjacent ones of said interconnecting ribs (5) being angularly displaced from each other about the axis (L).

2. The grinder assembly as claimed in Claim 1, **characterized in that** said rotary shaft (3) has first and second ends (31, 32) which are respectively and rotatably mounted on the front and rear bearing walls (205, 206).

3. The grinder assembly as claimed in Claim 2, **characterized in that** one of said first and second ends (31, 32) is disposed to be coupled with the drive unit (300).

4. The grinder assembly as claimed in Claim 1, **characterized in that** said shredding blade unit (4) includes a plurality of said leading blade segments (4a) and a plurality of said trailing blade segments (4b), said leading blade segments (4a) and said trailing blade segments (4b) being alternately displaced from one another so as to cooperatively form a spiral contour that extends spirally around the axis (L).

5. The grinder assembly as claimed in Claim 4, **characterized in that** said spiral contour is interrupted by a gap (42), said gap (42) extending along a central line which is perpendicular to the axis (L).

6. The grinder assembly as claimed in Claim 5, **characterized in that** two of said interconnecting ribs (5) are engaged with said spiral contour and located adjacent to said gap (42).
